# FASCICULE DE BREVET EUROPEEN

(11) **EP 2 215 314 B1**
(45) Date de publication et mention de la délivrance du brevet: **11.07.2012**
(21) Numéro de dépôt: 08851429.4
(22) Date de dépôt: 05.11.2008
(51) Int. Cl.: B01D 21/00, E03F 5/16, B01D 17/04, C02F 101/32

(54) **DISPOSITIF POUR LE TRAITEMENT DES EAUX DE PLUIE**
VORRICHTUNG ZUR BEHANDLUNG VON REGENWASSER
DEVICE FOR TREATING RAIN WATER

(30) Priorité: 25.11.2007 WO PCT/IB2007/054777
(43) Date de publication de la demande: 11.08.2010
(73) Titulaire: Techsep environnement SARL, 1033 Cheseaux-Lausanne (CH)
(72) Inventeur: VUILLIOMENET, Albert, CH-1807 Blonay (CH)
(74) Mandataire: Grosfillier, Philippe
(86) Numéro de dépôt international: PCT/IB2008/054610
(87) Numéro de publication internationale: WO 2009/066196

(56) Documents cités:
- CA-A1- 2 510 476
- DE-U1- 9 401 148
- DE-U1- 20 020 705
- GB-A- 2 418 374
- US-A1- 2005 077 248

## Description

### Domaine de l'invention

La présente invention concerne le traitement des eaux de pluie, notamment en milieu urbain. Elle se rapporte plus précisément à l'extraction de sédiments, d'hydrocarbures et autres éléments similaires devant être séparés de l'eau de pluie.

### Etat de la technique

On connaît divers dispositifs utilisés pour le traitement des eaux de pluie. Voir par exemple les documents brevets WO 2007/011864, US 6780310, EP 0 928 861 A1 US 5814216, et GB2 418 374.

Un autre système existant consiste en deux bassins disposés en ligne.

Le premier bassin est un décanteur placé en amont du séparateur d'hydrocarbures.

Pourvu à son entrée d'une paroi plongeante et dans lequel le liquide s'écoule horizontalement. Par suite de l'écoulement ralenti, les matières lourdes décantent dans le bassin, Temps de passage usuel :120-150 s.

Le deuxième bassin est un séparateur à effet renforcé, pourvu à son entrée et sa sortie d'une paroi plongeante et dans la ligne du flux d'un filtre coalescent. Le liquide s'écoule horizontalement.

Par suite de l'écoulement ralenti, les substances légères remontent dans la chambre collectrice des huiles et les matières lourdes décantent dans la chambre des boues. Le temps de rétention varie en général entre 90 et 300 sec.

### Description générale de l'invention

La présente invention a pour objet un dispositif amélioré pour le traitement des eaux de pluie, dispositif permettant d'extraire des éléments de forme et de nature diverses tels que sédiments, hydrocarbures, corps flottants, etc...

Le dispositif selon l'invention comprend une enceinte adaptée pour être introduite verticalement dans un dépotoir-séparateur. Le dépotoir-séparateur comportant une entrée et une sortie d'eau. Le dispositif selon l'invention se caractérise par le fait qu'une partie de la paroi latérale de l'enceinte est au moins partiellement courbe et que ladite partie comprend un filtre. L'intérieur de l'enceinte étant formé par une première et une deuxième cavités séparées par une paroi verticale mais communiquant entre elles au moyen d'un orifice disposé dans la partie inférieure de l'enceinte. La première cavité ayant pour paroi latérale externe ledit filtre. La deuxième cavité comportant un orifice de sortie adapté pour communiquer directement avec ladite sortie d'eau du dépotoir-séparateur.

Selon un mode de réalisation de l'invention, le dispositif comporte: une première enceinte de forme sensiblement cylindrique et une deuxième enceinte de forme également sensiblement cylindrique disposée de manière concentrique à l'intérieure de la première enceinte. Un orifice d'admission d'eau est fixé ou formé intégralement avec la première enceinte.

La deuxième enceinte est formée de deux demi-cylindres séparés par une paroi commune qui permet toutefois de crée un orifice de communication entre les deux demi-cylindres, dans sa portion inférieure. La paroi externe sensiblement cylindrique d'un des deux demi-cylindres est constituée par une surface étanche dans sa partie inférieure et par une surface perméable (filtre) dans sa partie supérieure. La paroi externe de l'autre demi-cylindre est imperméable ; un orifice d'évacuation d'eau est fixée ou formé intégralement avec la paroi externe de ce demi-cylindre.

Avec le dispositif selon l'invention, on réalise dans un seul dépotoir-séparateur des opérations de sédimentation, de décantation et de séparation.

Il convient également de souligner un des avantages particuliers offerts par la présente invention, à savoir que les opérations de séparation, décantation et de sédimentation s'adaptent aux débits entrants.

Bien que le dispositif selon l'invention soit conçu pour instaurer un écoulement laminaire de l'eau, des turbulences peuvent toutefois survenir en cas de fortes averses. Le fonctionnement du dispositif est toutefois assuré, quel que soit le type d'écoulement.

### Description détaillée de l'invention

L'invention sera mieux comprise ci-dessous au moyen d'une description détaillée contenant des exemples illustrés par les figures suivantes :
La figure 1 représente un premier mode de réalisation d'un dispositif selon l'invention.
La figure 2 représente un deuxième mode de réalisation d'un dispositif selon l'invention.
Les figures 3A et 3B représentent respectivement une vue de dessus et une vue de face d'une enceinte pouvant être utilisée dans les dispositifs des figures 1 et 2.

### Références numériques utilisées dans les figures :

- 1.: Dépotoir-séparateur
- 2.: Entrée d'eau
- 3.: Chicane
- 4.: Enceinte
- 5.: Filtre
- 6.: 1^{er} demi-cylindre
- 7.: Tube d'évacuation
- 8.: 2^{e} demi-cylindre
- 9.: Paroi de séparation
- 10.: Bride
- 11.: Organe de saisie
- 12.: Sortie d'eau
- 13.: Chicane
- 14.: Grille
- 15.: Passage
- 16.: Piège à surnageant

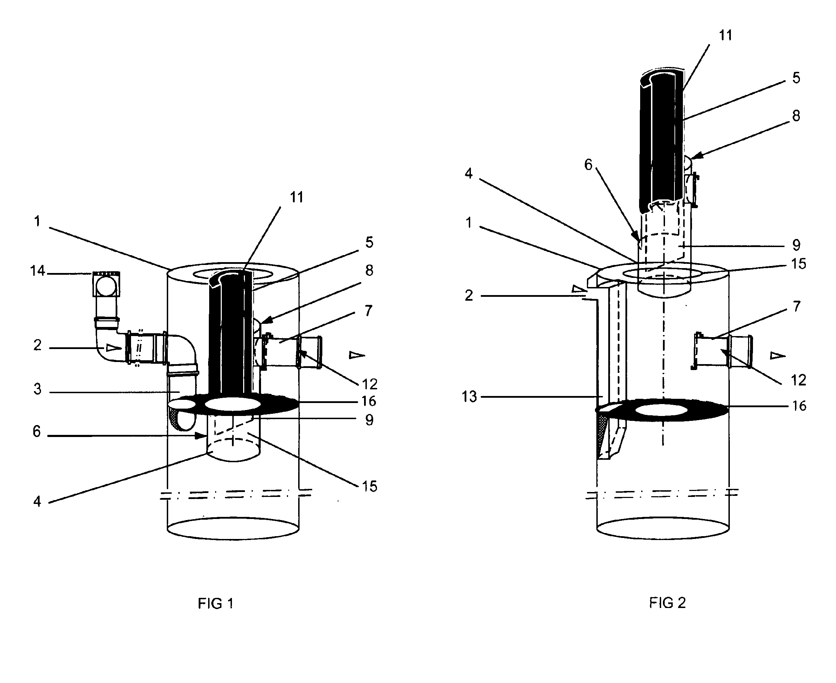

Comme on peut le voir sur la figure 1, une chicane d'entrée **3** de forme tubulaire, reliée à une entrée d'eau **2,** elle-même reliée à une grille **14,** dirige la pénétration tangentielle du liquide dans un dépotoir-séparateur **1** en forme de cuve cylindrique. Le dépotoir-séparateur **1** comporte en outre une sortie d'eau **12.**

Une enceinte **4** de forme sensiblement cylindrique est disposée verticalement et co-axialement à l'intérieur du dépotoir-séparateur **1.** Une partie de la paroi de l'enceinte **4** est formée par un filtre **5.** L'enceinte **4** est constituée de deux demi-cylindres **6,8** formant chacun une cavité, les deux cavités **6,8** étant séparées par une paroi **9** verticale et étanche mais dont la partie inférieure comporte un passage **15** reliant les deux cavités **6,8.** La paroi externe de la première cavité **6** est formée par le filtre **5,** la deuxième cavité comportant un tube d'évacuation **7** qui communique directement avec la sortie **12** du dépotoir-séparateur **1.**

Un piège à surnageant **16,** sous forme d'un grillage circulaire à mailles fines (de préférence inférieures à 5 mm), est disposé autour des deux demi-cylindres **6,8,** de manière à joindre respectivement son bord interne avec les parois des demi-cylindres **6,8** et son bord externe avec la paroi interne du dépotoir-séparateur **1.** Le piège à surnageant **16** est constitué de préférence en un matériau synthétique mais tout autre matériau approprié peut être utilisé.

Plus précisément, le piège à surnageant **16** est disposé de préférence juste en-dessous du niveau inférieur du filtre **5** et en-dessus de l'entrée d'eau **2.** Il a pour but d'empêcher le colmatage accidentel du filtre **5** par des objets flottants, dégradables ou non, d'une densité en général inférieure à 1, comme par exemple des feuilles d'arbres, aiguilles de résineux ou des mégots de cigarettes.

La partie supérieure de l'enceinte **4** est dotée d'un organe de saisie **11** comprenant un ensemble de tiges et un anneau. L'organe de saisie **11** facilite le retrait de l'enceinte **4.** Voir à ce sujet la figure 2 qui illustre une position dans laquelle l'enceinte **4** est retirée du dépotoir-séparateur **1.**

Le système illustré sur la figure 2 est identique à celui de la figure 1. Il ne diffère que par le type de chicane d'entrée **13** qui possède une section non-tubulaire.

Le liquide qui sort de la chicane **3,13** effectue un mouvement circulaire le long de la paroi interne du dépotoir-séparateur **1** et contacte le filtre **5** tangentiellement, sur toute sa surface. La vitesse et la direction suivie par le liquide dépendent de la hauteur de la colonne d'entrée d'eau, de préférence d'au moins 70 cm, du débit et de la géométrie de la chicane d'entrée **3.**

En se déplaçant, le liquide se réparti autour de l'enceinte **4,** le long de sa surface latérale externe. Cette trajectoire du liquide a pour effet d'induire une augmentation de la période de rétention. Les particules en suspension ont plus de temps pour se décanter selon leurs densités respectives.

L'enceinte **4** étant complètement fermée sur le bas et fermée sur le haut, mais uniquement en-dessus de la deuxième cavité **8.** En résumé, la deuxième cavité **8** est fermée et ne comporte que deux passages **15, 7,** le premier **15** communiquant avec la première cavité **6,** le deuxième **7** avec la sortie **2** du dépotoir-séparateur **1.** Le piège à surnageant **16** constitue le premier élément de séparation qui assure la décantation des matières lourdes et légères. Sédimentées, elles se déposent dans la chambre des boues, au fond du dépotoir-séparateur **1.** Les substances légères montent en surface.

Le filtre **5,** p.ex. en mousse de polyéther, est de préférence amovible et monté sur un support. Il assure une phase de séparation des substances légères puis, par une filtration du liquide, l'effet de séparation renforcée.

Avantageusement, le filtre **5** est coalescent. Par sa structure (dimensions et disposition des pores), il force ainsi des particules liquides, en général des particules d'hydrocarbure, à se réunir et former des gouttelettes plus grosses, gouttelettes qui sont séparées par gravité.

De la sorte, l'huile est les hydrocarbures en dispersion sont captés par le filtre **5.** A relever par ailleurs que les objets flottants de taille relativement importantes sont également retenus par le filtre **5.**

Autre aspect important, le filtre **5,** par sa surface développée importante et sa position verticale, favorise la pénétration du liquide sans le perturber (régime laminaire), ce qui a pour effet d'améliorer l'efficacité de la séparation.

A l'intérieur de l'enceinte **4,** la paroi **9** qui sépare les deux cavités **6,8** est judicieusement dimensionnée de manière à assurer une deuxième phase de décantation et de séparation appliquée au liquide qui a traversé le filtre **5.**

Plus précisément, les grosses gouttelettes formées par coalescence (hydrocarbures ou autre composant huileux) qui se trouvent dans la première cavité 6 sont dirigées par gravité vers le haut de celle-ci. Comme le passage 15 reliant les deux cavités 6,8 est disposé au niveau de la partie inférieure de l'enceinte 4, les grosses gouttelettes sont confinées (piégées) dans la première cavité. Ainsi, seul un liquide traité est autorisé à pénétrer dans la deuxième cavité puis à utiliser la sortie 7,12 du dépotoir-séparateur 1.

A noter que le volume du liquide à l'intérieur de l'enceinte 4 est déterminé par la hauteur plongeante de la chicane d'entrée 3,13.

Le volume du liquide à l'intérieur du dépotoir-séparateur 1 est quant à lui déterminé par la hauteur de la sortie d'eau 7,12.

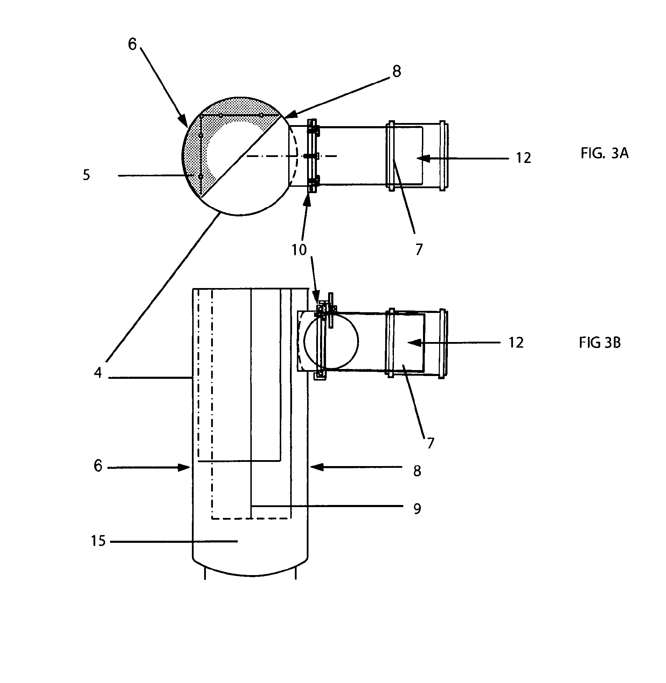

Avantageusement (voir figures 3A et 3B), l'enceinte 4 est une construction amovible suspendue au tube d'évacuation **7** par une bride **10** munie d'un joint O-Ring en caoutchouc nitrile, à effet d'étanchéité spontanée et de deux clavettes.

De préférence, un orifice étanche est disposé vers le tube d'évacuation **7** afin de permettre le prélèvement d'échantillons. Alternativement, l'orifice étanche peut être remplacé par une vanne papillon à fermeture automatique.

Le dispositif selon l'invention et ses parties constitutives peut être constitué de n'importe quel matériau permettant d'atteindre le but recherché. Les parois étanches de l'enceinte **4** peuvent avantageusement être constituées d'acier inoxydable stabilisé au titane.

Le dispositif selon l'invention peut être conçu pour divers débits, par exemple inférieur à 2 I/sec ou supérieur à 25 I/sec.

L'utilisation du dispositif selon l'invention a montré les résultats suivants pour un débit variant entre 1 et 22 I/sec. :
MES piégées > de 98 %
Dans les boues se déposes les métaux lourds
Testé sur band d'essais : Hydrocarbures < 5 mg/l
Abaissement significatifs des métaux lourds dissous

La présente invention permet :
- de confiner et de traiter dès la source la pollution des eaux pluviales des dépotoirs de chaussées, regards, sacs, avaloirs de routes et parkings zones de roulements étanches,
- de faciliter le passage d'évacuation des eaux du système unitaire au séparatif,
- de réduire l'arrivée des eaux aux STEP, améliore l'épuration, et en conséquence abaisse les coûts de traitement,
- de choisir les exutoires existants les plus proches:Infiltrations directe dans le nappes phréatique les revitalisent, raccordements aux coulisses, baies, ruisseaux, collecteurs d'eaux de surface, étangs, lacs.
- de diminuer les MES, pas de dépôt dans les ouvrages d'évacuation,
- de réduire les coûts d'entretiens,
- une meilleure répartition et un meilleur contrôle des déversements sur le territoire du PGEE,
- d'éviter les constructions de collecteurs de détournements, de grands séparateurs, d'étangs ou bassins de traitements des eaux de chaussées, de déversoirs de crues, de limiteurs de débits et de déplacer les charges polluantes,
- de réduire le stress hydrique,
- d'améliorer l'oxydation des matières organiques biodégradables par des bactéries anaérobiques et la minéralisation de la matière organique soluble en suspension.

## Revendications

1. Dispositif pour le traitement des eaux de pluie comprenant une enceinte (4) adaptée pour être introduite verticalement dans un dépotoir-séparateur (1), ledit dépotoir-séparateur (1) comportant une entrée (2) et une sortie (12) d'eau, **caractérisé par le fait qu'**une partie de la paroi latérale de l'enceinte (4) est au moins partiellement courbe et que ladite partie comprend un filtre (5), l'intérieur de l'enceinte (4) étant formé par une première (6) et une deuxième (8) cavités séparées par une paroi verticale (9) mais communiquant entre elles au moyen d'un passage (15) disposé dans la partie inférieure de l'enceinte (4), la première cavité (6) ayant pour paroi latérale externe ledit filtre (5), la deuxième cavité (8) comportant un orifice de sortie adapté pour communiquer directement, via un tube d'évacuation (7), avec ladite sortie d'eau (12) du dépotoir-séparateur (1).

2. Dispositif selon la revendication 1 dans lequel ladite enceinte (4) est de forme cylindrique.

3. Dispositif selon la revendication 1 ou 2 dans lequel ladite enceinte (4) comporte une organe de saisie (11) disposé sur sa partie supérieure.

4. Dispositif selon l'une des revendications précédentes dans lequel le filtre (5) est amovible.

5. Dispositif selon l'une des revendications précédentes dans lequel le filtre (5) est coalescent.

6. Dispositif selon l'une des revendications précédentes comprenant un piège à surnageant (16) disposé entre les parois externes desdites cavités (6,8) et la paroi interne du dépotoir-séparateur (1).

7. Ensemble constitué par un dispositif selon l'une des revendications précédentes et un dépotoir-séparateur (1) dans lequel ladite entrée d'eau (2) comprend une chicane d'entrée (3,13) disposée de manière à ce que l'eau entrante débouche dans le dépotoir-séparateur (1) selon une direction sensiblement horizontale.

8. Ensemble constitué par un dispositif selon l'une des revendications précédentes et un dépotoir-séparateur (1), ce dernier comprenant un tube d'évacuation (7), **caractérisé en ce que** l'enceinte (4) est montée suspendue sur le tube d'évacuation (7).

9. Ensemble selon la revendication 8 dans lequel le tube d'évacuation (7) comporte des moyens pour le prélèvement d'échantillons.

## Claims

1. Device for the treatment of rain water comprising an enclosure (4) adapted to be inserted vertically into a sump-separator (1), said sump-separator (1) comprising a water inlet (2) and a water outlet (12), **characterized in that** a portion of the lateral wall of the enclosure (4) is at least partially curved and that said portion comprises a filter (5), the inside of the enclosure (4) being formed by a first cavity (6) and a second cavity (8) separated by a vertical wall (9) but communicating with one another by means of a passage (15) created in the lower portion of the enclosure (4), the first cavity (6) having said filter (5) as its outer lateral wall, the second cavity (8) comprising an outlet orifice suitable for communicating directly, via a discharge tube (7), with said water outlet (12) of the sump-separator (1).

2. Device according to Claim 1, wherein said enclosure (4) has a cylindrical shape.

3. Device according to Claim 1 or 2, wherein said enclosure (4) comprises a gripping member (11) placed on its upper portion.

4. Device according to one of the preceding claims, wherein the filter (5) is removable.

5. Device according to one of the preceding claims, wherein the filter (5) is coalescing.

6. Device according to one of the preceding claims, comprising a supernatant trap (16) placed between the outer walls of said cavities (6, 8) and the inner wall of the sump-separator (1).

7. Assembly consisting of a device according to one of the preceding claims and a sump-separator (1) in which said water inlet (2) comprises an inlet chicane (3, 13) created so that the incoming water flows into the sump-separator (1) in a substantially horizontal direction.

8. Assembly consisting of a device according to one of the preceding claims and a sump-separator (1), the latter comprising a discharge tube (7), **characterized in that** the enclosure (4) is mounted suspended on the discharge tube (7).

9. Assembly according to Claim 8, wherein the discharge tube (7) comprises means for taking samples.

## Patentansprüche

1. Vorrichtung zur Behandlung von Regenwasser, die einen Behälter (4) enthält, der geeignet ist, um senkrecht in einen Schlammsammler-Abscheider (1) eingeführt zu werden, wobei der Schlammsammler-Abscheider (1) einen Wasserzulauf (2) und -ablauf (12) aufweist, **dadurch gekennzeichnet, dass** ein Teil der Seitenwand des Behälters (4) zumindest zum Teil gekrümmt ist, und dass der Teil einen Filter (5) enthält, wobei das Innere des Behälters (4) von einem ersten (6) und einem zweiten (8) Hohlraum geformt wird, die durch eine senkrechte Wand (9) getrennt, aber miteinander über einen Durchgang (15) verbunden sind, der im unteren Teil des Behälters (4) angeordnet ist, wobei der erste Hohlraum (6) als äußere Seitenwand den Filter (5) hat, wobei der zweite Hohlraum (8) eine Ablauföffnung aufweist, die geeignet ist, um direkt über ein Abflussrohr (7) mit dem Wasserablauf (12) des Schlammsammler-Abscheiders (1) in Verbindung zu stehen.

2. Vorrichtung nach Anspruch 1, wobei der Behälter (4) eine zylindrische Form hat.

3. Vorrichtung nach Anspruch 1 oder 2, wobei der Behälter (4) ein Erfassungsorgan (11) aufweist, das auf seinem oberen Teil angeordnet ist.

4. Vorrichtung nach einem der vorhergehenden Ansprüche, wobei der Filter (5) entfernbar ist.

5. Vorrichtung nach einem der vorhergehenden Ansprüche, wobei der Filter (5) koaleszent ist.

6. Vorrichtung nach einem der vorhergehenden Ansprüche, die eine Aufschwemmungsfalle (16) enthält, die zwischen den Außenwänden der Hohlräume (6, 8) und der Innenwand des Schlammsammler-Abscheiders (1) angeordnet ist.

7. Einheit, die aus einer Vorrichtung nach einem der vorhergehenden Ansprüche und einem Schlammsammler-Abscheider (1) besteht, bei der der Wasserzulauf (2) ein Eingangsleitblech (3, 13) enthält, das so angeordnet ist, dass das zulaufende Wasser gemäß einer im Wesentlichen waagrechten Richtung im Schlammsammler-Abscheider (1) mündet.

8. Einheit, die aus einer Vorrichtung nach einem der vorhergehenden Ansprüche und einem Schlammsammler-Abscheider (1) besteht, wobei letzterer ein Abflussrohr (7) enthält, **dadurch gekennzeichnet, dass** der Behälter (4) am Abflussrohr (7) aufgehängt montiert ist.

9. Einheit nach Anspruch 8, bei der das Abflussrohr (7) Einrichtungen zur Probenentnahme aufweist.
